# EUROPEAN PATENT APPLICATION

(11) **EP 0 537 512 A2**
(43) Date of publication of application: **21.04.1993**
(21) Application number: 92116170.9
(22) Date of filing: 22.09.1992
(51) Int. Cl.: H02P 7/628

(54) **Circuit device for controlling a three-phase asynchronous motor powered with direct current**

(30) Priority: 16.10.1991 IT BO910377
(71) Applicant: INDEL B S.R.L., I-61019 S. Agata Feltria (Pesaro) (IT)
(72) Inventor: Giorgetti, Pierluigi, I-61019 S. Agata Feltria (Pesaro) (IT)
(74) Representative: Modiano, Guido, Dr.-Ing.

(57) **Abstract**

A circuit device for controlling a three-phase asynchronous motor powered by a direct-current source comprising an inverter equipped with a drive stage controlled by a microprocessor unit so as to provide, during startup, a voltage whose frequency rises progressively to the working frequency. The microprocessor unit is able to decrease or increase the frequency of the motor supply voltage according to the voltage values detected by a voltage sensor, so as to keep the value of the torque close to the operating value.

## Description

The present invention relates to a circuit device for controlling a three-phase asynchronous motor powered with direct current.

The so-called PWM (Pulse Width Modulation) method is known for using direct current to supply power to induction motors. Known circuit devices do not allow optimum operation if the direct-current power supply output is instable, for example when the power supply is a battery whose charging conditions affect the motor supply voltage. Known devices furthermore produce a high percentage of harmonics in the current of the motor, causing high losses and torque variations.

The technical aim of the present invention is to provide a circuit device which allows to overcome the known problems.

This aim is achieved by a circuit device for controlling a three-phase asynchronous motor powered by a direct-current source and characterized in that it comprises an inverter equipped with a drive stage controlled by a microprocessor unit so as to provide, during startup, a voltage whose frequency rises progressively to the working frequency, said microprocessor unit being able to decrease or increase the frequency of the motor supply voltage according to the voltage values detected by a voltage sensor so as to keep the value of the torque close to the working value.

Further particulars of the present invention will become apparent from the following description, on the basis of the accompanying drawings, wherein:
figure 1 is a block diagram of a circuit device according to the present invention;
figures 2 and 3 are flowcharts illustrating the operation of the device;
figure 4 is an electrical diagram of a device for controlling the actuation motor of a refrigeration compressor;
figure 5 shows the behavior of the alternating voltage at the output of the inverter.

With reference to the above figures, the reference numeral 1 indicates a three-phase asynchronous motor which is powered by a direct-current power supply constituted by a battery 2. Conversion of the direct voltage into a three-phase alternating voltage suitable for powering the motor is performed by an inverter 3 comprising a drive stage controlled by a microprocessor unit 4.

The inverter 3 comprises a three-phase bridge, and the microprocessor unit 4 controls said inverter so as to modulate the output voltage according to a waveform which is as free as possible from harmonics.

The numerals 5 and 6 respectively indicate sensors for detecting the voltage of the battery and the current absorbed by the motor; their output signals, sent to the microprocessor unit, allow to deactivate the motor when the battery is drained, in order to protect its functionality or avoid operating conditions which are dangerous for the components used for control and for the motor when said motor is unable to start normally due to any reason.

Finally, the numeral 7 designates a quartz oscillator which sets the operating frequency for the microprocessor unit, and the numeral 8 indicates a circuit for activating a fan 9 when the microprocessor unit detects that the values of the operating parameters are correct.

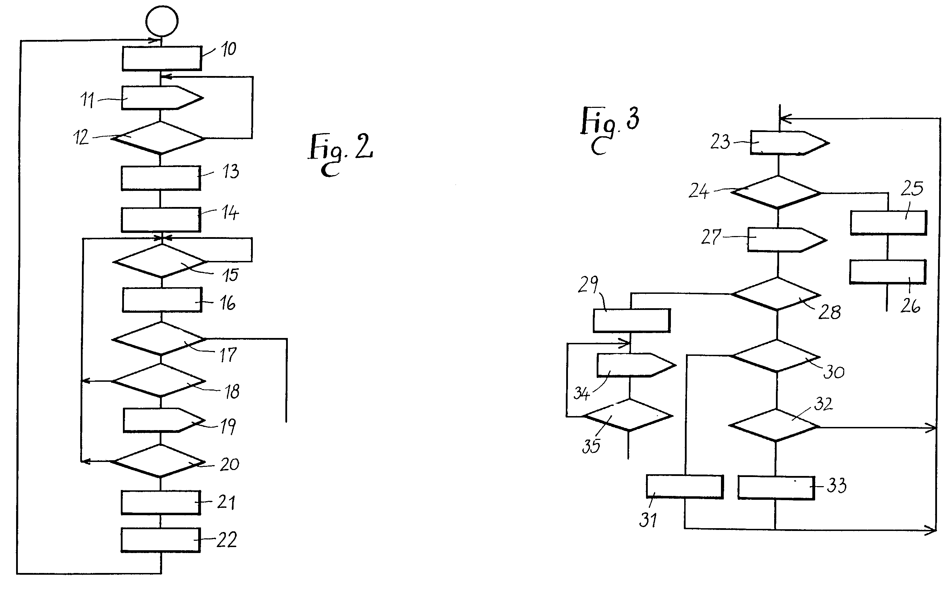

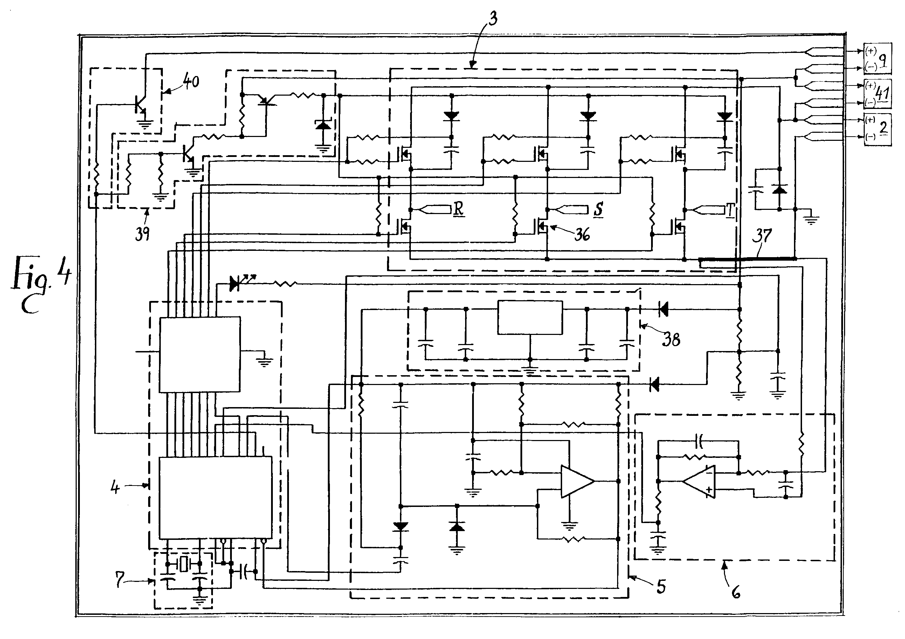

The operating method of the described circuit device is described hereinafter with reference to the flowcharts shown in figures 2 and 3.

After activating the device by performing the initialization operations in the block 10, the conditions of the battery 2 are tested, determining the value of its voltage in the block 11.

The block 12 determines whether the voltage measurement is higher than the minimum allowed value. If the result is "YES", processing passes to the block 13; if the result of the test is "NO", processing returns to the block 11. Block 13 activates the drive output of the inverter 3. This step is followed by the startup step, which begins in the block 14 with the determination of an initial value for the frequency of the power supply voltage of the motor 1. On this subject, it should be noted that in order to ensure correct motor startup the torque must be as high as possible. In a three-phase asynchronous motor, maximum torque occurs when the rotation rate is close to the field rotation rate. Therefore, initially, in order to facilitate the initial pickup of the motor, it is convenient to have a rotating field whose frequency is lower than the nominal one and then increase said frequency progressively until the working frequency is reached.

360^{o} cyclic completion is then checked in the block 15. If the result is negative, processing returns to the block 15; if the result is positive, processing continues in the block 16, where the frequency is increased by discrete values Δ F.

The block 17 determines whether the frequency has reached the working value. If it has, the circuit device passes into the working phase (figure 3); if it has not, the causes which have prevented the reaching of the working frequency are checked. In particular, the block 18 checks for the presence of the start current. If this check yields "NO" as a result, processing returns to the block 15; if instead the result is "YES", the supply current of the motor 1 is checked in the block 19 and the block 20 checks whether the intensity of the current is within the limits allowed during the startup phase. If the intensity of the current does not exceed the allowed limits, processing returns to the block 15, otherwise the supply outputs are deactivated in the block 21.

In some applications, for example when the motor 1 drives a refrigeration compressor, it is convenient to wait for a certain time in order to allow stabilization of the pressure in the compressor. Once this wait has been completed in the block 22, reactivation is performed in the block 10.

Assuming that the operating conditions allow to reach the working frequency, processing passes from the block 17 to the block 23 to measure the absorbed current. The block 24 checks whether the absorbed current is within the intended working limits. If the result is "NO", the outputs are deactivated (block 25) and after the stabilization wait (block 26), the device is reset.

If the current is within the norm, the conditions of the battery are monitored by measuring its voltage in the block 27. Then the voltage is checked in the block 28 to determine whether it is higher than a minimum value above which there is no damage to the battery.

If the minimum value is not exceeded, the outputs are deactivated in the block 29. Vice versa, if the value of the voltage of the battery is higher than the minimum one, processing continues in the block 30 to check whether this value is smaller than the nominal one. If so, the block 31 calculates a reduced working frequency. Otherwise the processing calculates the increased working frequency in the block 32 by means of the block 33, in which the voltage is checked to determine whether it is higher than the nominal value. If the voltage is lower, processing returns to the block 23. Processing equally returns from the blocks 31 and 33 to the block 23.

It should be noted that the voltage of the battery is measured again in the block 34 after the deactivation of the outputs in the block 29. The block 35 determines whether the value of the voltage is lower than a maximum one and then either a reset is performed or control returns to the block 34.

In practice, the working step provides for maintaining the driving frequency of the motor at the nominal value and for continuously measuring the power supply voltage and the absorbed current. If the voltage is lower than the minimum value, the motor is stopped. The motor is restarted when the conditions of the battery have returned to normal. If instead the voltage is lower than the nominal value but is in any case higher than the minimum value, the microprocessor unit, according to the voltage decrease, determines a corresponding decrease in the motor drive frequency. This solution is justified by analysis of the efficiency of the motor. In fact, if in normal conditions the operating frequency is the one which ensures maximum efficiency, at slightly lower voltages the delivered torque decreases, so that the motor runs at a higher slippage rate, which increase its losses. The circuit device according to the present invention allows to decrease the working frequency in order to determine an increase in the current and thus in the torque and return the efficiency to optimum values. Conversely, if the supply voltage is higher than the nominal value, the microprocessor unit increases the working frequency, thus improving the capacity of the compressor.

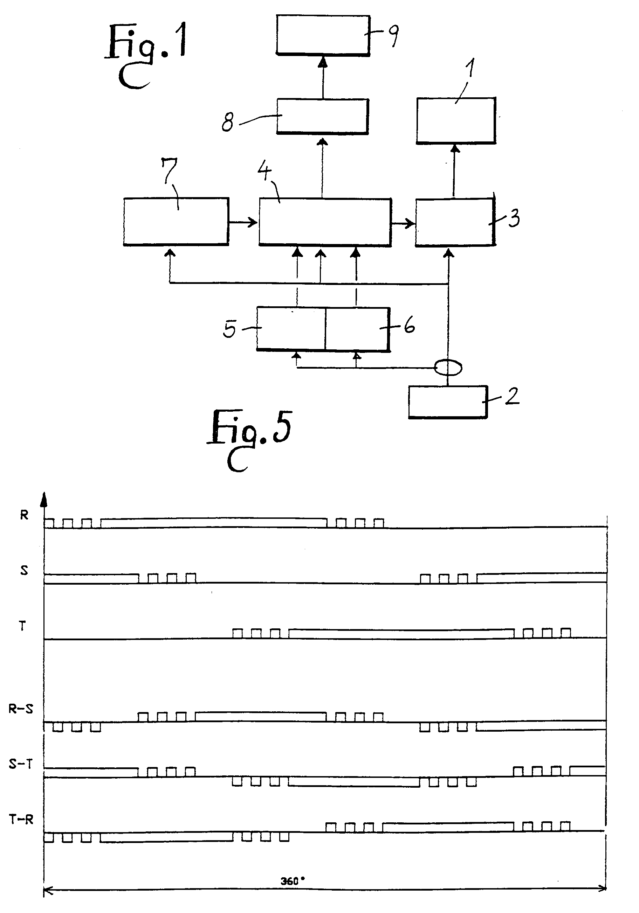

An example of the circuit device according to the invention is shown in figure 4, which illustrates an electrical diagram for driving a three-phase asynchronous motor intended to drive a refrigeration compressor. In said figure, the reference numerals are the same with which the corresponding groups which constitute the block diagram of figure 1 have been indicated.

In particular, the inverter 3 is constituted by a three-phase bridge composed of three pairs of HEXFETs 36, wherein the HEXFETs of each pair are connected in series with the poles of the power supply battery 2. Each HEXFET has a control gate to which the control signals arriving from the microprocessor unit 4 are sent. The control signals are distributed in a cyclic manner onto the HEXFETs so that the alternating voltage shown in figure 5 for supplying power to the motor is present at the points R, S and T which are located between each pair of HEXFETs arranged in series.

Preferably, the waveform obtained is controlled by seven pulses which allow optimization represented by the reduction in harmonic content and bridge switching losses.

It should be noted that the outputs R, S and T take part, with opposite polarities, in the forming of the voltages applied to the windings of the motor.

A shunt 37 is inserted along the conductor which is connected to the negative pole of the battery to draw a voltage which is proportional to the current which flows through it; said current controls an amplifier 38 which constitutes said sensor 6 for measuring the current absorbed by the motor. If the absorbed current exceeds a preset threshold value, the amplifier sends to the microprocessor unit a signal to inhibit the driving of the inverter and thus to stop the motor.

The battery voltage sensor 5 is constituted by a voltage divider which is connected to a voltage regulator 39, which at all times provides a voltage which is proportional to the circuit supply voltage. Depending on the voltage of the battery, the microprocessor unit emits a sequence of pulses whose frequency is proportional to the value of the voltage.

If the voltage of the battery drops below a preset minimum value, inverter driving is discontinued so as to avoid damage to the battery.

Finally, the reference numeral 39 designates a stage which provides a regulated auxiliary voltage for driving the inverter, and 40 designates a device for activating a cooling fan which is activated by the microprocessor unit when the values of the operating parameters are correct. The described device is completed by a thermostat 41 which controls the inverter according to the temperature, in order to activate or deactivate the refrigeration compressor.

In a further example, the microprocessor unit 4 is preset to detect whether the voltage of the battery is higher (for example double) than the intended one and accordingly reduces (halves) the voltage.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Circuit device for controlling a three-phase asynchronous motor (1) powered by a battery (2) and characterized in that it comprises an inverter (3) equipped with a drive stage controlled by a microprocessor unit (4) so as to provide, during startup, a voltage whose frequency rises progressively to the working frequency, said microprocessor unit (4) being able to decrease or increase the frequency of the motor supply voltage according to the voltage values detected by a voltage sensor (5) so as to keep the value of the torque close to the operating value.

2. Device according to claim 1, characterized in that said inverter (3) comprises a three-phase bridge composed of three pairs of HEXFETs (36), the HEXFETs of each pair being connected in series between the poles of the battery (2), the intermediate points constituting the points for drawing the alternating voltage.

3. Device according to claim 1, characterized in that it comprises a current sensor (6) which inhibits the driving of the inverter (3) when it detects a threshold value of the current absorbed by the motor (1).

4. Device according to claim 1, characterized in that it comprises a circuit (40) for driving a cooling fan which activates said fan when the microprocessor unit (4) detects that the values of the operating parameters are correct.

5. Device according to claim 1, characterized in that the inverter (3) is controlled by the microprocessor unit (4) with a sequence of an odd number of pulses, preferably seven.

6. Device according to claims 1 to 5, characterized in that the microprocessor unit (4) is preset for detecting a higher-than-intended battery voltage (2) and for returning it to said value.
